# EUROPÄISCHE PATENTSCHRIFT

(11) **EP 2 403 919 B1**
(45) Veröffentlichungstag und Bekanntmachung des Hinweises auf die Patenterteilung: **02.10.2013**
(21) Anmeldenummer: 10727355.9
(22) Anmeldetag: 27.05.2010
(51) Int. Cl.: C09K 3/32, C09K 8/00

(54) **VERWENDUNG WACHSUMHÜLLTER SANDKÖRNER ZUR BESEITIGUNG VON ÖLVERUNREINIGUNGEN**
USE OF WAX-COATED GRAINS OF SAND TO ELIMINATE OIL CONTAMINATION
UTILISATION DE GRAINS DE SABLE ENROBÉS DE CIRE POUR L'ÉLIMINATION D'IMPURETÉS PÉTROLIFÈRES

(30) Priorität: 14.05.2010 DE 102010020455
(43) Veröffentlichungstag der Anmeldung: 11.01.2012
(73) Patentinhaber: Beermann, Norbert, 80539 München (DE)
(72) Erfinder: Beermann, Norbert, 80539 München (DE)
(74) Vertreter: ter Meer, Nicolaus
(86) Internationale Anmeldenummer: PCT/EP2010/003227
(87) Internationale Veröffentlichungsnummer: WO 2011/141042

(56) Entgegenhaltungen:
- WO-A1-98/56520
- US-A- 4 551 253
- US-A1- 2005 023 714
- US-A1- 2006 257 643

## Beschreibung

### Gebiet der Erfindung

Die Erfindung betrifft die Verwendung wachsumhüllter Sandkörner als Ölbindemittel zur Beseitigung von Ölverunreinigungen in Form von Ölfilmen oder Ölteppichen auf Wasseroberflächen oder in Form von Ölfilmen auf festen Verkehrsflächen.

### Stand der Technik

Ölbindemittel oder auch Ölbinder werden bei der Ölschadensbekämpfung zum Abbinden oder Aufsaugen von Ölen auf offenen Gewässern oder auf festen Verkehrsflächen eingesetzt. Ölbinder sind meist feinkörnig oder pulverig, teilweise auch flüssig. Weiterhin gibt es auch schwimmfähige Ölbindemittel, die oftmals in Kombination mit schwimmenden Ölsperren zur Beseitigung von Mineralölen auf Gewässern eingesetzt werden. Die Grundmaterialien der Ölbinder sind mineralische oder auch pflanzliche Stoffe, insbesondere Maisspindelgranulat.

Die herkömmlichen Ölbindemittel sind in der Regel darin nachteilig, dass ihre Herstellung aufwendig und kostspielig ist und oftmals den Zusatz toxischer und umweltbelastender Stoffe erfordert. Ferner erfordert die Lagerung und der Transport der Ölverunreinigungen enthaltenden Ölbindemittel nach deren Einsatz besondere Maßnahmen, ebenso wie die abfallrechtlich vorgeschriebene Beseitigung des mit Öl vermischten Ölbindemittels.

Wie aus der aktuellen Presseberichterstattung (Mai 2010) zur Ölpest im Golf von Mexiko hervorgeht, wird bei Ölunfällen bei Tiefseebohrungen auch versucht, das aus den Lecks austretende Rohöl direkt mit umweltbelastenden Chemikalien zu bekämpfen.

Aus der DE 196 15 896 C2 ist ein starrer Sandkörper bekannt, bestehend aus einer Vielzahl von aneinander haftenden, mit einer aus Wachs bestehenden Umhüllung versehenen

Sandkörnern. Durch Abreiben des Sandkörpers erhält man diskrete oder agglomerierte Sandkörner, die mit einer aus Wachs bestehenden Umhüllung versehen sind. Die mit Wachs umhüllten Sandkörner sollen sich als Gleit- und Rutschunterlagen, als Füllmaterial oder als Polstermaterial in Weitsprunggruben eignen.

### Aufgabe der Erfindung

Der Erfindung liegt die Aufgabe zugrunde, ein Ölbindemittel zur Verfügung zu stellen, das keine toxischen und umweltbelastenden Stoffe beinhaltet und durch ein einfaches und kostengünstiges Verfahren vorgesehen werden kann. Das Ölbindemittel soll sich zur Beseitigung von Ölverunreinigungen auf Wasseroberflächen sowie auf festen Verkehrsflächen eignen.

### Zusammenfassung der Erfindung

Die der Erfindung zugrunde liegende Aufgabe wird gelöst durch die Verwendung von diskreten oder agglomerierten wachsumhüllten Sandkörnern gemäß Anspruch 1. Vorteilhafte bzw. besonders zweckmäßige Ausführungsformen des Anmeldungsgegenstandes sind in den Unteransprüchen angegeben.

Gegenstand der Erfindung ist somit die Verwendung von diskreten oder agglomerierten Sandkörnern, die vollständig oder teilweise mit einer aus Wachs bestehenden Umhüllung versehen sind, als Ölbindemittel zur Beseitigung von Ölverunreinigungen.

Die erfindungsgemäße Verwendung sieht somit ein neues Verfahren vor, um in vorteilhafter Weise ölverschmutzte Wasseroberflächen oder ölverschmutzte feste Verkehrsflächen von dem Öl zu reinigen durch Verwendung umweltverträglicher Materialien, nämlich natürlichem Sand, der mit einem umweltfreundlichen Additiv, nämlich Wachs, umhüllt ist.

### Detaillierte Beschreibung der Erfindung

Gemäß der Erfindung hat sich überraschenderweise gezeigt, dass ein lediglich aus Sandkörnern und Wachs bestehendes Produkt, wobei das Wachs die Sandkörner vollständig oder teilweise umhüllt, in vielfältiger Weise als Ölbindemittel zur Beseitigung von Ölverunreinigungen eingesetzt werden kann.

Das Gewichtsverhältnis von Sand zu Wachs kann hierbei geeigneterweise etwa 8:1 bis 50:1, vorzugsweise 20:1 bis 30:1, betragen.

Der bei der erfindungsgemäßen Verwendung einsetzbare Sand unterliegt keiner besonderen Beschränkung. Die Sandkörner weisen üblicherweise einen Durchmesser von 0,06-3 mm auf und werden je nach Korngröße als Feinsand (Äquivalentdurchmesser von üblicherweise 0,06-0,2 mm), Mittelsand (Äquivalentdurchmesser von üblicherweise 0,2-0,63 mm) oder Grobsand (Äquivalentdurchmesser von üblicherweise 0,63-3,0 mm) bezeichnet. Vorzugsweise wird Sand mit einem Durchmesser von 0,1-0,5 mm eingesetzt. Beispielsweise kann Dünensand von Meeresstränden eingesetzt werden, dessen Körnchen üblicherweise einen Durchmesser von etwa 1 mm oder weniger aufweisen und der gegebenenfalls auf die gewünschte Korngröße zermahlen werden kann.

Auch das bei der Erfindung eingesetzte Wachs unterliegt keiner besonderen Beschränkung, Wachs ist normalerweise bei Raumtemperatur knetbar, über 40°C ohne Zersetzung schmelzend, oberhalb des Schmelztemperaturbereichs verhältnismäßig niedrigviskos und nicht fadenziehend. In der Regel gehen Wachse etwa zwischen 50 und 90°C in den schmelzflüssigen, niedrigviskosen Zustand über. Für die erfindungsgemäßen Zwecke eigenen sich natürliche, chemisch modifizierte als auch synthetische Wachse oder Kombinationen davon.

Beispiele für natürliche Wachse sind pflanzliche Wachse, wie Candelilawachs, Carnaubawachs, Japanwachs, Espartograswachs, Korkwachs, Guarumawachs, Reiskeimölwachs, Zuckerrohrwachs, Ouricurywachs und Montanwachs, tierische Wachse, wie Bienenwachs, Schellackwachs, Walrat und Lanolin, Mineralwachse, wie Ceresin und Ozokerrit beziehungsweise Erdwachs, petrochemische Wachse, wie Petrolatum, Paraffinwachse und Mikrowachse.

Beispiele chemisch modifizierter Wachse sind Hartwachse, wie Montanesterwachse, Sasolwachse und hydrierte Jojobawachse.

Beispiele synthetischer Wachse sind Polyalkylenwachse und Polyethylenglykolwachse.

Unter diskreten Sandkörnern, die vollständig oder teilweise mit einer aus Wachs bestehenden Umhüllung versehen sind, werden hierin einzelne Sandkörner verstanden, die vollständig oder teilweise mit einer aus Wachs bestehenden Umhüllung versehen sind.

Unter agglomerierten Sandkörnern, die vollständig oder teilweise mit einer aus Wachs bestehenden Umhüllung versehen sind, werden Zusammenlagerungen von mehreren Sandkömem, wobei jedes einzelne Sandkorn vollständig oder teilweise eine Wachsumhüllung aufweist und/oder wobei die äußere Agglomeratoberfläche eine vollständige oder teilweise Wachsumhüllung aufweist, verstanden. Solche Agglomerate können Äquivalentdurchmesser von bis zu mehreren Zentimetern, etwa bis 5 cm, aufweisen. Solche Agglomerate können beispielsweise auch durch Zerteilen der in DE 196 15 896 C2 beschriebenen, starren Sandkörper erhalten werden.

Eine besonders bevorzugte Verwendung des oben beschriebenen Ölbindemittels betrifft die Beseitigung von Ölverunreinigungen in Form von Ölfilmen oder Ölteppichen auf Wasseroberflächen, wobei das Ölbindemittel auf die Ölfilme oder Ölteppiche aufgebracht wird, um die Ölverunreinigungen zu binden, und die gebildete Masse aus Ölbindemittel und den gebundenen Ölverunreinigungen nach dem Absinken auf den Wasseruntergrund von diesem geborgen und entsorgt wird.

Bei dieser Verwendung hat sich gezeigt, dass das Ölbindemittel sehr rasch die Ölverunreinigungen bindet und die gebildete Masse aus Ölbindemittel und den gebundenen Ölverunreinigungen unmittelbar nach dem Aufsaugen des Öls absinkt und sich auf dem Wasseruntergrund in Form von Teppichen oder Verklumpungen ansammelt. Das Öl ist stabil in dieser Masse gebunden und kann mittels geeigneten Geräten oder Maschinen vom Meeres- oder Wasserboden separiert und aufgefangen werden, vorausgesetzt die Ölschadensbekämpfung findet in nicht zu tiefem Wasser und vorzugsweise in Ufernähe statt. Da die gebildete Masse aus Ölbindemittel und gebundenen Ölverunreinigungen das Öl in stabiler Weise festhält, kann diese Masse ohne größere Probleme und ohne Belastung der Umwelt in Ufernähe gelagert und danach abtransportiert werden. Dass sich die gebildete Masse aus Ölbindemittel und den gebundenen Ölverunreinigungen im Wasser absetzt ist als besonders überraschend anzusehen, da nicht nur Öl und Wachs auf dem Wasser schwimmen, sondern auch das oben beschriebene Ölbindemittel aus wachsumhüllten Sandkörnern schwimmfähig ist.

Für die Ölschadensbekämpfung von Ölverunreinigungen auf Wasseroberflächen eignet sich erfindungsgemäß ein Volumenverhältnis von Ölverunreinigung zu Ölbindemittel von etwa 1:1 bis etwa 1:6, insbesondere etwa 1:2 bis etwa 1:4.

Eine weitere bevorzugte Verwendung des oben beschriebenen Ölbindemittels betrifft die Beseitigung von Ölverunreinigungen in Form von Ölfilmen auf festen Verkehrsflächen, wobei das Ölbindemittel auf die Ölfilme aufgebracht wird, um die Ölverunreinigungen zu binden und die gebildete Masse aus Ölbindemittel und den gebundenen Ölverunreinigungen geborgen und entsorgt wird.

Bei dieser Anwendung wird ein Gewichtsverhältnis von Ölverunreinigung zu Ölbindemittel so gewählt, dass die gebildete Masse aus Ölbindemittel und den gebundenen Ölverunreinigungen kehrfähig ist und per Hand oder mittels einer Kehrmaschine zusammengekehrt werden kann. Auf öffentlichen Straßen und Verkehrsflächen ist es in der Regel notwendig, nach dem Bergen des verschmutzten Ölbindemittels noch eine Nassreinigung durchzuführen.

Ein Vorteil der erfindungsgemäß beschriebenen Verwendungen besteht darin, dass die Entsorgung der Masse aus Ölbindemittel und den gebundenen Ölverunrenigungen dadurch erfolgen kann, dass diese der Energiegewinnung durch Verbrennung in Verbrennungsöfen zugeführt wird. Beispielsweise kann die geborgene Masse aus mit Öl verunreinigtem Ölbinder in Kraftwerken verbrannt werden. Das einzige Abfallprodukt, das nach einer solchen Verbrennung übrig bleibt, ist der Ausgangsstoff Sand, jetzt allerdings wieder in seiner reinen, natürlichen Sandkornform ohne Wachsumhüllung und ohne Ölverschmutzung.

Dieser Sand, ebenso wie natürlich vorkommender Sand, kann wiederum zur Herstellung von diskreten oder agglomerierten Sandkörnern, die vollständig oder teilweise mit einer aus Wachs bestehenden Umhüllung versehen sind, eingesetzt werden. Zur Herstellung der erfindungsgemäß als Ölbindemittel zu verwendenden wachsumhüllten Sandkörner werden vorzugsweise die Sandkörner und das Ausgangswachs getrennt voneinander auf eine Temperatur von 50-90°C, vorzugsweise 60-90°C, erwärmt, die erwärmten Sandkörner und das erwärmte flüssige Wachs zusammengefügt und das Mischgut unter ständigem Mischen oder Bewegen in geeigneten Mischvorrichtungen abkühlen gelassen. Hierbei werden, je nach Mischungsverhältnis von Wachs zu Sandkörnern, vollständig oder teilweise mit Wachs umhüllte, diskrete oder agglomierierte Sandkörner erhalten, die rieselfähig sind, in geeigneten Gebinden abgepackt und erfindungsgemäß als Ölbindemittel zur Beseitigung von Ölverunreinigungen eingesetzt werden können.

Die Herstellung des erfindungsgemäß verwendeten Ölbindemittels ist unter ökologischen Gesichtspunkten sowie unter dem Gesichtspunkt der Kostenersparnis besonders vorteilhaft, da die Wachsumhüllung, je nach geografischer Lage, alleine mittels Sonnenenergie durchgeführt werden kann.

Damit schließt sich ein umweltverträglicher Kreislauf, angefangen mit dem mittels Sonnenenergie (natürlich auch mittels anderer Energien) hergestellten wachsumhüllten Sand, der Bekämpfung von Ölkatastrophen mittels dem präparierten Sand und schließlich der Entsorgung der Abfallmasse durch Verbrennung unter Energiegewinnung, wobei zum Schluss wieder reiner Sand heraus kommt, ohne dass wie bei den üblichen Ölkatastrophen durch ausgelaufenes Öl Gewässer und Uferbereiche verseucht werden, und ohne dass durch den Verlust der gewaltigen Ölmengen der Wirtschaft im allgemeinen ein großer Schaden entstanden wäre, da Öl im Sand zur Weiterverbrennung aufgefangen werden kann.

Auch unter Kostengesichtspunkten ist die erfindungsgemäß vorgeschlagene Verwendung zur Beseitigung von Ölverunreinigungen auf Wasseroberflächen und auf festen Verkehrsflächen vorteilhaft, da sowohl die Ausgangsmaterialien Sand und Wachs als auch die Herstellung des erfindungsgemäß eingesetzten Ölbinders kostengünstig sind. Durch die erfindungsgemäße Verwendung werden Gewässer und Uferbereiche nicht durch chemische Substanzen vergiftet, wie es bei vielen bisherigen Verfahren zur Auflösung von Ölteppichen auf Wasseroberflächen der Fall ist. Um die Ölschadensbekämpfung in Ufernähe durchführen zu können, kann es jedoch erforderlich sein, im Uferbereich schwimmende Ölschutzsperren bzw. Barrieren auf der Wasseroberfläche vorzusehen, um das Eindringen von Ölverunreinigungen in das Landesinnere zu verhindern. Allerdings kann dafür das Aufbringen des Ölbindemittels auf die Ölteppiche oder Ölfilme in Ufemäher leichter durchgeführt werden, und die gebildete Masse aus Ölbindemittel und den gebundenen Ölverunreinigungen kann leichter vom Wasseruntergrund geborgen und anschließend entsorgt werden.

### Beispiele

Die Erfindung wird anhand der folgenden Ausführungsbeispiele näher erläutert.

### Beispiel 1

Eine Schüssel von 20-30 cm Durchmesser, gefüllt mit ca. 2-3 Liter Wasser wird "verunreinigt" mit 3 Esslöffeln pflanzlichem Speiseöl. Man beobachtet, dass sich auf der Wasseroberfläche ein Ölfilm bildet und dieser auf der Wasseroberfläche schwimmt.

Nun werden wachsumhüllte Sandkörner darauf gestreut. Es bildet sich eine dünne Sandschicht auf dem Wasser und auf dem Öl. Nach etwas Schütteln des Wasserbehälters, um so Wasserwellen zu imitieren, sinkt der Sand zum Boden der Schüssel und reißt dabei das Öl mit sich. Bei weiterem Schütteln der Schüssel ist die Oberfläche des Wassers nach kurzer Zeit wieder ölfrei. Das Öl verklumpt am Boden mit dem Sand, es wird förmlich vom Sand aufgesogen. Das Wasser das nun nach dem Absinken des präparierten Sandes an der Oberfläche ölfrei ist, wird nun in einen kleinen Eimer gegossen. Beim Abgießen stellt man fest, dass das Wasser schnell heraus fließt und sich im Eimer sammelt, während der Sand mit dem Öl in der Schüssel zurück bleibt, jetzt ohne Wasser.

Ergebnis: Das Wasser im Eimer ist so sauber geworden, dass man sich damit die Hände waschen kann, ohne dass Ölrückstände an den Händen zurück bleiben.

### Beispiel 2

Beispiel 1 wird wiederholt, mit Ausnahme der Verwendung von etwa 1/8 Liter Dieselöl statt pflanzlichem Speiseöl.

Bei dieser Menge von Dieselöl bildet sich nun auf der Wasseroberfläche ein dicker Dieselölteppich, der die ganze Schüssel einnimmt. Jetzt werden wieder die präparierten Sandkörner auf den Ölteppich aufgestreut. Auf der Wasseroberfläche entsteht nun ein kräftiger Sandteppich, der nach und nach auch ohne jedes Schütteln nach unten absackt und das Dieselöl mit nach unten reißt. Danach liegt am Boden des Wasserbehälters der Sandteppich, zum Teil durchsetzt mit Sandverklumpungen, voll gesogen mit dem Dieselöl. Nach einiger Zeit ist die Wasseroberfläche, vor allem nach Schütteln der Schüssel, völlig vom Öl befreit. Das Wasser wird wieder abgegossen und in einen Eimer gefüllt.

Ergebnis: Auch mit diesem Wasser kann man sich wieder die Hände waschen, ohne dass Dieselölrückstände an der Hand bleiben.

### Beispiel 3

Beispiel 1 wird wiederholt, jedoch wird diesmal, um Meereswasser zu imitieren, Kochsalz in das Wasser geschüttet.

Nun wird wieder 1/8 Liter pflanzliches Speiseöl hinzu gegeben, so dass eine dicke Ölschicht auf dem Wasser schwimmt. Es wird der präparierte, mit Wachs umhüllte Sand darauf geschüttet. Überraschenderweise rutscht der Sand jetzt sehr schnell in die Tiefe und reißt dabei die Ölschichten mit. Nach sehr kurzer Zeit, also viel schneller als bei dem normalen, salzlosen Wasser reißt der Sand den Ölteppich nach unten. Jedoch ist festzustellen, dass noch einige (wahrscheinlich wegen dem Vorgang des schnellen Absinkens des präparierten Sandes) Ölflecken auf der Wasseroberfläche zu sehen sind. Daher wird ergänzend wachsumhüllter Sand auf die verbliebenen Ölflecken gestreut. Jetzt bleibt der Sand auf der Wasseroberfläche wie Puderzucker liegen und sackt nicht mehr sofort ab (bei reinem, ölfreiem Wasser bleibt generell der präparierte, mit Wachs umhüllte Sand puderzuckerartig auf der Wasseroberfläche liegen). Erst nach heftigen Wellenbewegungen, verursacht durch Schütteln der Schüssel, sinkt auch dieser Sand auf den Boden der Schüssel ab. Die Wasseroberfläche ist nun total rein. Dieses Wasser wurde in einer 2-Liter-Flasche gesammelt, selbst nach Tagen hat sich kein Ölfilm bzw. Ölflecken auf der Wasseroberfläche in der Flasche gezeigt. Das Wasser in der Flasche ist quasi ölfrei und rein.

### Beispiel 4

Beispiel 1 wird wiederholt, diesmal wird auf die Wasseroberfläche jedoch schweres, leicht zähflüssiges Öl (Motorenöl) geschüttet. Es bildet sich eine sehr dicke Schicht von Schweröl auf der Wasseroberfläche. Nun kommt der präparierte, wachsumhüllte Sand darauf. Dieser Sand rutscht nicht sofort durch die Wasseroberfläche durch, sondern bleibt auf der dicken Ölschicht liegen. Bei weiterer Zugabe von präpariertem Sand bildet sich nun eine dicke Sandschicht auf dem Ölteppich. Auf einmal bricht dieser Sandteppich an einer Stelle ein, er sackt leicht ab, das reine Wasser überspült diesen abgesackten Bereich und dehnt sich über die den gesamten zusammenhängenden Sandteppich aus und drückt den Sandteppich nach unten. In großen Flächen wird nun die Ölschicht mit dem Sandteppich zusammen auf den Boden gerissen. Danach wird eine zweite Sandbestreuung auf die Wasseroberfläche vorgenommen. Jetzt bleibt nur noch eine sehr dünne, puderzuckerähnliche Sandschicht auf dem Wasser liegen. Nach einigem Schütteln der Schüssel rutscht auch diese dünne Sandschicht nach unten und nimmt die letzten Ölflecken mit.

Ergebnis: Das Wasser wird wieder abgeschöpft und in eine Flasche gefüllt - auch dieses Wasser ist rein.

### Vergleichsbeispiel 1 und Beispiel 5

Beispiel 1 wird wiederholt, jedoch mit normalem, natürlichem Sand und parallel mit präpariertem, wachsumhüllten Sand. In jeder Schüssel befindet sich ca. 1 Liter Wasser. In beide Schüsseln kommt je ca. 1/8 Liter Dieselöl. Dieses Dieselöl fällt erst einmal wegen der geringen Wassermenge auf den Boden des Wasserbehälters und quillt dann nach oben an die Wasseroberfläche und breitet sich als dicke Ölschicht auf der Wasseroberfläche aus. In Schüssel 1 (Vergleichsbeispiel 1) wird nun normaler, natürlicher Sand gestreut, in Schüssel 2 (Beispiel 5) wird der präparierte, wachsumhüllte Sand gestreut (Durchmesser der Sandkörner zwischen 0,1 und 0,5 mm).

### Ergebnis:

In der Schüssel 1 sinkt der natürliche Sand sehr schnell auf den Boden des Behälters und verteilt sich auf dem Boden über die ganze Fläche. Die Wasseroberfläche bleibt sehr trüb, das Dieselöl schwimmt weiter oben als dicker Film, zum Teil jetzt vermischt mit Sand.

In der Schüssel 2 sinkt der präparierte, wachsumhüllte Sand ebenfalls recht schnell auf den Boden und reißt dabei das Öl mit nach unten. Unten auf dem Boden verklumpt der Sand, die Wasseroberfläche dagegen verliert ihren öligen Film, das Wasser erscheint klar.

### Beispiel 6

Verwendet wird eine durchsichtige, leere 1 Liter Flasche, in die 1/8 Liter Dieselöl gefüllt wird. Nun werden durch die Flaschenöffnung die wachsumhüllten Sandkörner hinein gegeben. Die wachsumhüllten Sandkörner dringen in die Dieselölschicht ein und saugen sich voll. Festzustellen ist, dass bei Einbringung einer zu geringen Menge von wachsumhüllten Sandkörnern sich noch eine zwar verringerte Dieselölschicht oberhalb des Sandes bildet. Bei weiterer Zufuhr von wachsumhüllten Sandkörnern wird auch die restliche Dieselölschicht voll aufgesaugt. Es entsteht in der Flasche ein fester Brei aus wachsumhüllten Sandkörnern, voll gesogen mit Dieselöl. Selbst beim Umdrehen der Flasche, obwohl die Flasche nur etwa halb gefüllt ist mit dem Gemisch aus wachsumhüllten Sandkörnern und Dieselöl, bleibt dieser feste Brei am Flaschenboden hängen. Kein Dieselöl tropft heraus und erst nach und nach bricht dieser Brei in kleinen Klumpen nach unten, aber Dieselöl tritt immer noch nicht aus.

## Patentansprüche

1. Verwendung von diskreten oder agglomerierten Sandkörnern, die vollständig oder teilweise mit einer aus Wachs bestehenden Umhüllung versehen sind, als Ölbindemittel zur Beseitigung von Ölverunreinigungen.

2. Verwendung nach Anspruch 1, wobei die mit Wachs umhüllten Sandkörner ein Gewichtsverhältnis von Sand zu Wachs von 8:1 bis 50:1, vorzugsweise 20:1 bis 30:1, aufweisen.

3. Verwendung nach Anspruch 1 und/oder 2, wobei die Sandkörner einen Durchmesser von 0,06-3 mm, vorzugsweise 0,1-0,5 mm, aufweisen.

4. Verwendung nach mindestens einem der Ansprüche 1 bis 3 zur Beseitigung von Ölverunreinigungen in Form von Ölfilmen oder Ölteppichen auf Wasseroberflächen, wobei das Ölbindemittel auf die Ölfilme oder Ölteppiche aufgebracht wird, um die Ölverunreinigungen zu binden, und die gebildete Masse aus Ölbindemittel und den gebundenen Ölverunreinigungen nach dem Absinken auf den Wasseruntergrund von diesem geborgen und entsorgt wird.

5. Verwendung nach mindestens einem der Ansprüche 1 bis 3 zur Beseitigung von Ölverunreinigungen in Form von Ölfilmen auf festen Verkehrsflächen, wobei das Ölbindemittel auf die Ölfilme aufgebracht wird, um die Ölverunreinigungen zu binden und die gebildete Masse aus Ölbindemittel und den gebundenen Ölverunreinigungen geborgen und entsorgt wird.

6. Verwendung nach Anspruch 4 oder 5, wobei die Entsorgung der Masse aus Ölbindemittel und den gebundenen Ölverunreinigungen dadurch erfolgt, dass diese der Energiegewinnung durch Verbrennung in Verbrennungsöfen zugeführt wird.

## Claims

1. Use of discrete or agglomerated sand grains provided completely or partially with a coating consisting of wax as an oil binder for elimination of oil contamination.

2. Use according to claim 1, wherein the wax-coated sand grains have a weight ratio of sand to wax of 8:1 to 50:1, preferably 20:1 to 30:1.

3. Use according to claim 1 and/or 2, wherein the sand grains have a diameter of 0.06-3 mm, preferably 0.1-0.5 mm.

4. Use according to at least one of claims 1 to 3 for elimination of oil contamination in the form of oil films or oil carpets on water surfaces, wherein the oil binder is applied to the oil films or oil carpets in order to bind the oil contamination, and the mass composed of oil binder and the bound oil contamination formed, after falling to the water bed, is retrieved therefrom and disposed of.

5. Use according to at least one of claims 1 to 3 for elimination of oil contamination in the form of oil films on solid traffic surfaces, wherein the oil binder is applied to the oil films in order to bind the oil contamination and the mass composed of oil binder and the bound oil contamination formed is retrieved and disposed of.

6. Use according to claim 4 or 5, wherein the mass composed of oil binder and the bound oil contamination is disposed of by supplying it to power generation by incineration in incineration furnaces.

## Revendications

1. Utilisation de grains de sable discrets ou agglomérés qui sont dotés totalement ou en partie d'une enveloppe constituée de cire en tant que liant pour huile, pour l'élimination d'impuretés pétrolifères.

2. Utilisation selon la revendication 1, les grains de sable enveloppés de cire présentant un rapport en poids du sable à la cire de l'ordre de 8:1 à 50:1, de préférence de 20:1 à 30:1.

3. Utilisation selon la revendication 1 et/ou la revendication 2, les grains de sable présentant un diamètre de 0,06 à 3 mm, de préférence de 0,1 à 0,5 mm.

4. Utilisation selon au moins l'une quelconque des revendications 1 à 3 pour l'élimination d'impuretés pétrolifères sous la forme de films de pétrole ou de tapis de pétrole sur des surfaces, lors de laquelle on applique le liant pour huile sur les films ou tapis d'huile pour lier les impuretés pétrolifères et après leur retombée sur les fonds aquatiques, on récupère sur ces derniers la masse formée par le liant pour huile et les impuretés pétrolifères liées et on l'évacue.

5. Utilisation selon au moins l'une quelconque des revendications 1 à 3 pour l'élimination d'impuretés pétrolifères sous la forme de films de pétrole sur des aires de circulation solides, lors de laquelle on applique le liant pour huile sur les films d'huile pour lier les impuretés pétrolifères, on récupère la masse formée par le liant pour huile et les impuretés pétrolifères liées et on les évacue.

6. Utilisation selon la revendication 4 ou la revendication 5, l'évacuation de la masse formée par le liant pour huile et les impuretés pétrolifères liées s'effectuant en l'alimentant vers la production énergétique par combustion dans des fours à combustion.
